# EUROPEAN PATENT SPECIFICATION

(11) **EP 3 242 999 B1**
(45) Date of publication and mention of the grant of the patent: **18.12.2019**
(21) Application number: 16701217.8
(22) Date of filing: 05.01.2016
(51) Int. Cl.: F02M 31/20, F25D 11/00, B60H 1/00, F28F 27/02, F28D 21/00, F25B 5/04, F25B 25/00, F25B 40/00, F25B 41/04

(54) **FUEL COOLING SYSTEM AND METHOD**
KRAFTSTOFFKÜHLSYSTEM UND VERFAHREN
SYSTÈME DE REFROIDISSEMENT DE CARBURANT ET PROCÉDÉ

(30) Priority: 07.01.2015 US 201562100529 P
(43) Date of publication of application: 15.11.2017
(73) Proprietor: Carrier Corporation, Farmington, Connecticut 06032 (US)
(72) Inventor: KONDRK, Jason R., East Syracuse, New York 13041 (US)
(74) Representative: Dehns
(86) International application number: PCT/US2016/012111
(87) International publication number: WO 2016/111960

(56) References cited:
- JP-A- H0 343 653
- JP-A- S61 101 660

## Description

### FIELD OF THE INVENTION

The subject matter disclosed herein relates to transportation refrigeration systems and, more specifically, to transportation refrigeration systems for cooling a fuel.

### BACKGROUND

Temperature controlled cargo containers, such as refrigerated trailers, are commonly used to transport food products and other temperature sensitive products. A refrigerated trailer typically includes a refrigeration unit generally mounted on the front wall of the trailer with a portion protruding into the interior of the trailer.

In some known trailers, an engine may be used to drive a compressor of the refrigeration system. Fuel for the engine may be located under the trailer and exposed to heat and ambient temperatures. Hot fuel occupies more space at less density of fuel, which may reduce engine power. Increased fuel temperature may also decrease the fuel viscosity, which may increase leakage flow past pistons during injection and allow increased unburned particulates into the atmosphere.

JP S61 101660 A discloses a heat exchanger having features according to the preamble of claim 1.

### BRIEF DESCRIPTION OF THE INVENTION

In one aspect, a fuel cooling system is provided. The fuel cooling system includes a refrigeration unit configured to circulate a refrigerant; a bypass cooling circuit fluidly coupled to the refrigeration unit; a power generation system operably coupled to the refrigeration unit, the power generation system including a fuel tank fluidly coupled to an engine by a supply conduit; a fuel cooling circuit fluidly coupled between the fuel tank and the engine, the fuel cooling circuit thermally coupled to the bypass cooling circuit and configured to cool a fuel by thermal exchange with the refrigerant; a heat exchanger thermally coupled between the bypass cooling circuit and the fuel cooling circuit; wherein the fuel cooling circuit comprises a fuel inlet conduit and a fuel return conduit fluidly coupled to the heat exchanger; characterised by: the fuel cooling circuit further comprising a bypass valve configured to selectively supply the fuel to the fuel cooling circuit, and a second bypass valve disposed on the supply conduit between the fuel inlet conduit and the fuel return conduit configured to selectively supply fuel directly from the fuel tank to the engine; and the bypass cooling circuit further comprising an inlet conduit and a return conduit fluidly coupled to the heat exchanger, and a bypass valve configured to selectively supply the refrigerant to the bypass cooling circuit.

Further embodiments may include: a container configured to store a cargo, wherein the refrigeration unit is coupled to the container and configured to condition an environment within the container; wherein the refrigeration unit comprises a compressor, a condenser, and an evaporator, wherein the bypass cooling circuit is fluidly coupled between the evaporator and the compressor downstream of the evaporator; wherein the bypass cooling circuit comprises an inlet conduit and a return conduit fluidly coupled to the heat exchanger; wherein the bypass cooling circuit further comprises a bypass valve configured to selectively supply the refrigerant to the bypass cooling circuit; a controller programmed to selectively switch the bypass valve between a first condition and a second condition when at least one of a predetermined ambient temperature is exceeded and a predetermined fuel temperature is exceeded; and/or a first temperature sensor configured to sense a temperature of ambient air and a second temperature sensor configured to sense a temperature of the fuel.

In another aspect, a temperature controlled cargo container is provided. The container includes a plurality of walls defining an interior space configured to store a cargo, a refrigeration unit configured to circulate a refrigerant, a bypass cooling circuit fluidly coupled to the refrigeration unit, and a heat exchanger thermally coupled between the bypass cooling circuit and the fuel cooling circuit. The container further includes a power generation system operably coupled to the refrigeration unit, the power generation system including a fuel tank fluidly coupled to an engine, and a fuel cooling circuit fluidly coupled between the fuel tank and the engine. The fuel cooling circuit is thermally coupled to the bypass cooling circuit and is configured to cool a fuel by thermal exchange with the refrigerant; wherein the fuel cooling circuit comprises a fuel inlet conduit and a fuel return conduit fluidly coupled to the heat exchanger, a bypass valve configured to selectively supply the fuel to the fuel cooling circuit, and a second bypass valve disposed on the supply conduit between the fuel inlet conduit and the fuel return conduit configured to selectively supply fuel directly from the fuel tank to the engine.

Further embodiments may include: wherein the refrigeration unit comprises a compressor, a condenser, and an evaporator, wherein the bypass cooling circuit is fluidly coupled between the evaporator and the compressor downstream of the evaporator; wherein the bypass cooling circuit comprises an inlet conduit and a return conduit fluidly coupled to the heat exchanger; wherein the bypass cooling circuit further comprises a bypass valve configured to selectively supply the refrigerant to the bypass cooling circuit; a controller programmed to selectively switch the bypass valve between a first condition and a second condition when at least one of a predetermined ambient temperature is exceeded and a predetermined fuel temperature is exceeded; and/or a first temperature sensor configured to sense a temperature of ambient air, and a second temperature sensor configured to sense a temperature of the fuel.

In yet another aspect, a method of controlling the fuel cooling system of the first aspect is provided, whereby a controller is coupled to the bypass cooling circuit and the fuel cooling circuit. The controller is programmed to selectively operate between a first mode and a second mode. In the first mode the refrigerant bypasses the bypass cooling circuit and the fuel bypasses the fuel cooling circuit, and in the second mode the refrigerant is circulated through the bypass cooling circuit and the fuel is circulated through the fuel cooling circuit.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic view of an exemplary cargo container having a fuel cooling system; and
FIG. 2 is a schematic view of an exemplary fuel cooling system that may be used with the cargo container shown in FIG. 1.

### DETAILED DESCRIPTION OF THE INVENTION

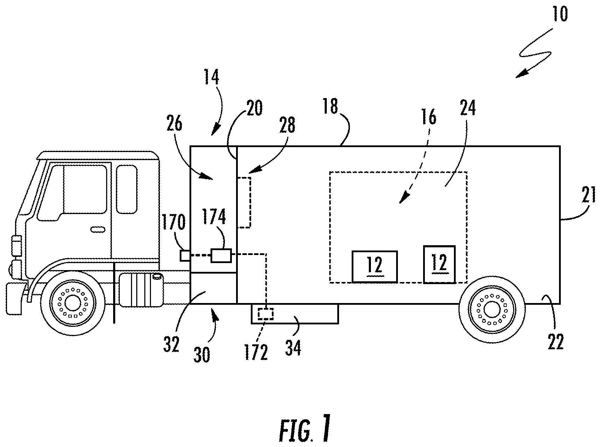

FIG. 1 illustrates a temperature controlled cargo container 10 configured to maintain a cargo 12 located inside the cargo container 10 at a selected temperature through the use of a temperature control unit 14. Cargo container 10 is utilized to transport cargo 12 via, for example, a truck, a train or a ship.

Container 10 generally includes an interior space 16 formed by thermally insulated walls including a top wall 18, a front wall 20, a rear wall 21, a floor 22, and side walls 24. Temperature control unit 14 is mounted at front wall 20. In the exemplary embodiment, temperature control unit 14 is a refrigeration unit that includes an exterior condenser 26 and an interior evaporator section 28. Refrigeration unit 14 is powered by a power generation system 30, which generally includes an engine 32 that is fluidly coupled to a fuel tank 34. Although described as a refrigeration unit, temperature control unit 14 may be any suitable environment conditioning system. For example, temperature control unit 14 may be a cab air conditioning unit for a truck.

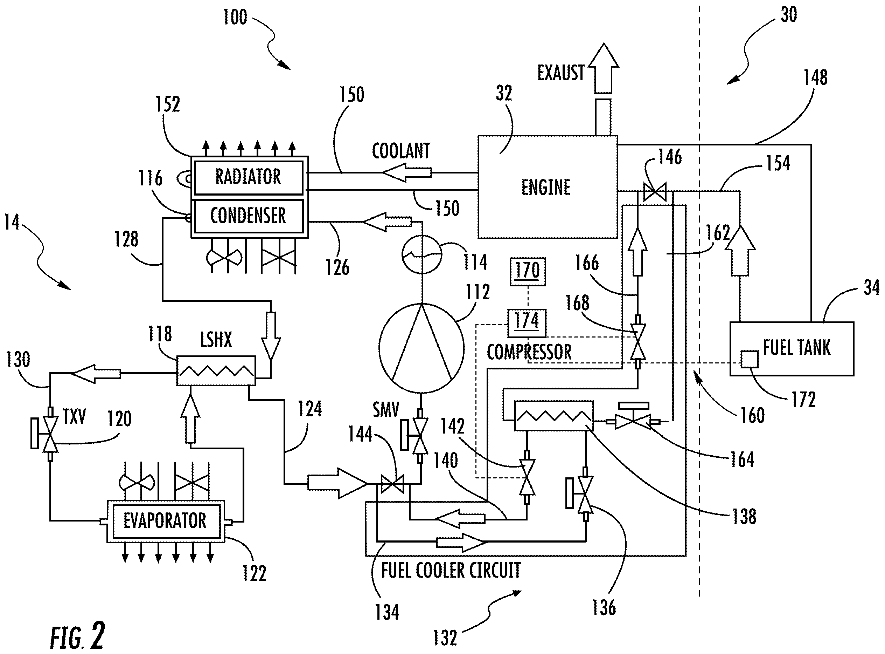

FIG. 2 is a schematic illustration of a fuel cooling system 100 that includes refrigeration unit 14 and power generation system 30.

Refrigeration unit 14 generally includes a compressor 112, a condenser 116, a liquid suction heat exchanger 118, an expansion valve 120, and an evaporator 122. In the exemplary embodiment, compressor 112 is a scroll or reciprocating type and evaporator 122 is a flooded-type evaporator. However, compressor 112 may be any suitable type of compressor (e.g., centrifugal), and evaporator 122 may be any suitable evaporator that enables unit 14 to function as described herein.

Refrigeration unit 14 is a closed loop system through which refrigerant is circulated in various states such as liquid and vapor. As such, a low temperature, low pressure superheated gas refrigerant is drawn into compressor 112 through a conduit 124 from evaporator 122. The refrigerant is compressed and the resulting high temperature, high pressure superheated gas is discharged from compressor 112 to condenser 116 through a conduit 126.

In condenser 116, gaseous refrigerant is condensed into liquid as it gives up heat. The superheated gas refrigerant enters condenser 116 and is de-superheated, condensed, and sub-cooled through a heat exchanger process with, for example, engine coolant flowing through condenser 116 (or thermally coupled heat exchanger) to absorb heat. However, condenser 116 may be air cooled or evaporatively cooled. The liquid refrigerant is discharged from condenser 116 and supplied through a conduit 128 to liquid suction heat exchanger 118.

In the exemplary embodiment, liquid suction heat exchanger 118 cools liquid refrigerant from condenser 116 against vaporized and/or vaporizing refrigerant from evaporator 122. The cooled liquid refrigerant is subsequently supplied to evaporator 122 through a conduit 130. The cooled liquid refrigerant passes through a metering device or expansion valve 120, which converts the relatively higher temperature, high pressure sub-cooled liquid to a low temperature saturated liquid-vapor mixture.

The low temperature saturated liquid-vapor refrigerant mixture then enters evaporator 122 where it boils and changes states to a superheated gas as it absorbs the required heat of vaporization from chilled water (or other heat exchange fluid). The low pressure superheated gas then passes in heat exchange relation with heat exchanger 118, where it is further heated to increase the superheat of the gas and vaporize any residual liquid droplets that may pass evaporator 122. The superheated gas is then drawn into the inlet of compressor 112 and the cycle is repeated.

In the exemplary embodiment, refrigeration unit 14 includes a bypass cooling circuit 132 that branches off from conduit 124 and generally includes an inlet conduit 134, a bypass valve 136, a heat exchanger 138, a return conduit 140, and a valve 142 (e.g., a check valve). A second bypass valve 144 may be disposed on conduit 124 between inlet conduit 134 and return conduit 140. When bypass valve 136 is closed (and second bypass valve 144 is open), refrigerant is supplied directly from heat exchanger 118 to compressor 112. When bypass valve 136 is open (and second bypass valve 144 is closed), refrigerant is supplied via inlet conduit 134 to heat exchanger 138 for thermal exchange with a fuel flowing through power generation system 30, as is described herein in more detail. The warmed refrigerant is then supplied via return conduit 140 to conduit 124 and back to compressor 112.

Power generation system 30 generally includes engine 32 fluidly coupled to fuel tank 34. A conduit 150 supplies a coolant between engine 32 and a heat exchanger 152 (e.g., a radiator) to cool engine 32 during operation. A fuel supply conduit 154 supplies a fuel (e.g., diesel fuel) to engine 32 for operation thereof, and any unused or unburnt fuel is returned to tank 34 via a fuel return conduit 148.

Power generation system 30 includes a fuel cooling circuit 160 that branches off from supply conduit 154 and generally includes an inlet conduit 162, a bypass valve 164, heat exchanger 138, a return conduit 166, and a valve 168 (e.g., a check valve). A second bypass valve 146 may be disposed on supply conduit 154 between inlet conduit 162 and return conduit 166. When bypass valve 164 is closed (and second bypass valve 146 is open), fuel is supplied directly from fuel tank 34 to engine 32. When bypass valve 164 is open (and second bypass valve 146 is closed), fuel is supplied via inlet conduit 162 to heat exchanger 138 where the fuel is subsequently cooled by thermal exchange with the refrigerant passing through bypass circuit 132. The cooled fuel is then supplied via return conduit 166 to engine 32. Alternatively, fuel cooling circuit 160 may branch off a return fuel conduit 148 from engine 32 to fuel tank 34.

As such, the cooled fuel supplied through fuel cooling circuit 160 facilitates increased engine efficiency and power, cleaner exhaust, and reduced fuel consumption.

Fuel cooling system 100 may include one or more sensors (e.g., temperature sensors) to determine when to utilize bypass circuit 132 and fuel cooling circuit 160 to cool fuel supplied to engine 32. For example, as illustrated, a first temperature sensor 170 senses the ambient temperature, and a second temperature sensor 172 senses the temperature of the fuel in fuel tank 34. A controller 174 may be in signal communication with sensors 170, 172 and bypass valves 136, 164. If a predetermined temperature is sensed by one of temperature sensors 170, 172, controller 174 may be programmed to open bypass valves 136 and 164 to commence cooling of fuel supplied to engine 32. For example, if the ambient temperature reaches a predetermined temperature, controller 174 may open bypass valves 136, 164. Alternatively, or in addition, if the fuel temperature reaches a predetermined temperature (e.g., an increased amount of warmed, unused fuel is returned to tank 34), controller 174 may open bypass valves 136, 164. As used herein, the term controller refers to an application specific integrated circuit (ASIC), an electronic circuit, a processor (shared, dedicated, or group) and memory that executes one or more software or firmware programs, a combinational logic circuit, and/or other suitable components that provide the described functionality.

Fuel cooling system 100 is configured to switch between a normal operation first mode and a fuel-cooling second mode. In the first mode, bypass valves 136, 164 are closed and valves 144, 146 are open such that bypass circuit 132 and fuel cooling circuit 160 are not utilized. At a predetermined time or after a predetermined condition, fuel cooling system 100 is switched to the second mode (e.g., by controller 174) and bypass valves 136, 164 are opened and valves 144, 146 are closed such that bypass circuit 132 and fuel cooling circuit 160 are utilized to cool fuel being supplied to engine 32.

Described herein are systems and methods for cooling a fuel used to operate an engine for a transport refrigeration unit. The system includes a refrigeration unit bypass circuit that is thermally coupled to a fuel cooling circuit attached to the engine. At a predetermined time, fuel is selectively supplied to the fuel cooling circuit to be cooled by refrigerant supplied to the bypass circuit. Cooling the fuel and its physical properties facilitates increased engine efficiency and power, cleaner exhaust, and reduced fuel consumption.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention as defined in the appended claims. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A fuel cooling system (100) comprising:
a refrigeration unit (14) configured to circulate a refrigerant;
a bypass cooling circuit (132) fluidly coupled to the refrigeration unit;
a power generation system (30) operably coupled to the refrigeration unit, the power generation system including a fuel tank (34) fluidly coupled to an engine (32) by a supply conduit (154);
a fuel cooling circuit (160) fluidly coupled between the fuel tank and the engine, the fuel cooling circuit thermally coupled to the bypass cooling circuit and configured to cool a fuel by thermal exchange with the refrigerant;
a heat exchanger (138) thermally coupled between the bypass cooling circuit and the fuel cooling circuit;
wherein the fuel cooling circuit comprises a fuel inlet conduit (162) and a fuel return conduit (166) fluidly coupled to the heat exchanger (138);
the bypass cooling circuit (132) further comprising an inlet conduit (134) and a return conduit (140) fluidly coupled to the heat exchanger (138), and a bypass valve (136) configured to selectively supply the refrigerant to the bypass cooling circuit (132);
**characterised by**:
the fuel cooling circuit further comprising a bypass valve (164) configured to selectively supply the fuel to the fuel cooling circuit, and a second bypass valve (146) disposed on the supply conduit (154) between the fuel inlet conduit (162) and the fuel return conduit (166) configured to selectively supply fuel directly from the fuel tank (34) to the engine (32).

2. The system of claim 1, further comprising a container (10) configured to store a cargo (12), wherein the refrigeration unit is coupled to the container and configured to condition an environment within the container.

3. The system of claim 1, wherein the refrigeration unit comprises a compressor (112), a condenser (116), and an evaporator (122), wherein the bypass cooling circuit is fluidly coupled between the evaporator and the compressor downstream of the evaporator.

4. The system of claim 1, further comprising a controller (174) programmed to selectively switch the bypass valve between a first condition and a second condition when at least one of a predetermined ambient temperature is exceeded and a predetermined fuel temperature is exceeded.

5. The system of claim 1, further comprising:
a first temperature sensor (170) configured to sense a temperature of ambient air; and
a second temperature sensor (172) configured to sense a temperature of the fuel.

6. A temperature controlled cargo container (10) comprising:
a plurality of walls defining an interior space (16) configured to store a cargo (12); and
a fuel cooling system as claimed in claim 1.

7. The container of claim 6, wherein the refrigeration unit comprises a compressor (112), a condenser (116), and an evaporator (122), wherein the bypass cooling circuit is fluidly coupled between the evaporator and the compressor downstream of the evaporator.

8. The container of claim 6, wherein the bypass cooling circuit comprises an inlet conduit (134) and a return conduit (140) fluidly coupled to the heat exchanger.

9. The container of claim 8, wherein the bypass cooling circuit further comprises a bypass valve (136) configured to selectively supply the refrigerant to the bypass cooling circuit.

10. The container of claim 6, further comprising a controller (174) programmed to selectively switch the bypass valve between a first condition and a second condition when at least one of a predetermined ambient temperature is exceeded and a predetermined fuel temperature is exceeded.

11. The container of claim 6, further comprising:
a first temperature sensor (170) configured to sense a temperature of ambient air; and
a second temperature sensor (172) configured to sense a temperature of the fuel.

12. A method of controlling the fuel cooling system (100) of claim 1, whereby a controller (174) is coupled to the bypass cooling circuit and the fuel cooling circuit, the controller programmed to selectively operate between a first mode and a second mode, wherein in the first mode the refrigerant bypasses the bypass cooling circuit and the fuel bypasses the fuel cooling circuit, and wherein in the second mode the refrigerant is circulated through the bypass cooling circuit and the fuel is circulated through the fuel cooling circuit.

## Patentansprüche

1. Kraftstoffkühlsystem (100), umfassend:
eine Kälteeinheit (14), die konfiguriert ist, um ein Kältemittel zu zirkulieren;
einen Umgehungskühlkreislauf (132), der fluidisch an die Kälteeinheit gekoppelt ist;
ein Stromerzeugungssystem (30), das an die Kälteeinheit wirkgekoppelt ist, wobei das Stromerzeugungssystem einen Kraftstofftank (34) beinhaltet, der durch eine Zufuhrleitung (154) fluidisch an einen Motor (32) gekoppelt ist;
einen Kraftstoffkühlkreislauf (160), der fluidisch zwischen dem Kraftstofftank und dem Motor gekoppelt ist, wobei der Kraftstoffkühlkreislauf an den Umgehungskühlkreislauf wärmegekoppelt und konfiguriert ist, um einen Kraftstoff durch Wärmeaustausch mit dem Kältemittel zu kühlen;
einen Wärmetauscher (138), der zwischen dem Umgehungskühlkreislauf und dem Kraftstoffkühlkreislauf wärmegekoppelt ist;
wobei der Kraftstoffkühlkreislauf eine Kraftstoffeinlassleitung (162) und eine Kraftstoffrücklaufleitung (166) umfasst, die fluidisch an den Wärmetauscher (138) gekoppelt sind;
wobei der Umgehungskühlreislauf (132) ferner eine Einlassleitung (134) und eine Rücklaufleitung (140), die fluidisch an den Wärmetauscher (138) gekoppelt sind, und ein Umgehungsventil (136) umfasst, das konfiguriert ist, um dem Umgehungskühlkreislauf (132) das Kältemittel selektiv zuzuführen;
**dadurch gekennzeichnet, dass**:
der Kraftstoffkühlkreislauf ferner ein Umgehungsventil (164), das konfiguriert ist, um dem Kraftstoffkühlkreislauf den Kraftstoff selektiv zuzuführen, und ein zweites Umgehungsventil (146) umfasst, das an der Zufuhrleitung (154) zwischen der Kraftstoffeinlassleitung (162) und der Kraftstoffrücklaufleitung (166) angeordnet und konfiguriert ist, um dem Motor (32) Kraftstoff direkt aus dem Kraftstofftank (34) selektiv zuzuführen.

2. System nach Anspruch 1, ferner umfassend einen Behälter (10), der konfiguriert ist, um eine Fracht (12) zu speichern, wobei die Kälteeinheit an den Behälter gekoppelt und konfiguriert ist, um eine Umgebung innerhalb des Behälters zu konditionieren.

3. System nach Anspruch 1, wobei die Kälteeinheit einen Verdichter (112), einen Kondensator (116) und einen Verdampfer (122) umfasst, wobei der Umgehungskühlkreislauf fluidisch zwischen dem Verdampfer und dem Verdichter stromabwärts des Verdampfers gekoppelt ist.

4. System nach Anspruch 1, ferner umfassend eine Steuerung (174), die programmiert ist, um das Umgehungsventil selektiv zwischen einem ersten Zustand und einem zweiten Zustand zu schalten, wenn zumindest eines von einer vorbestimmten Umgebungstemperatur überschritten ist und einer vorbestimmten Kraftstofftemperatur überschritten ist.

5. System nach Anspruch 1, ferner umfassend:
einen ersten Temperatursensor (170), der konfiguriert ist, um eine Temperatur von Umgebungsluft zu erfassen; und
einen zweiten Temperatursensor (172), der konfiguriert ist, um eine Temperatur des Kraftstoffes zu erfassen.

6. Temperaturgesteuerter Frachtbehälter (10), umfassend:
eine Vielzahl von Wänden, die einen Innenraum (16) definiert, der konfiguriert ist, um eine Fracht (12) zu speichern; und
ein Kraftstoffkühlsystem nach Anspruch 1.

7. Behälter nach Anspruch 6, wobei die Kälteeinheit einen Verdichter (112), einen Kondensator (116) und einen Verdampfer (122) umfasst, wobei der Umgehungskühlkreislauf fluidisch zwischen dem Verdampfer und dem Verdichter stromabwärts des Verdampfers gekoppelt ist.

8. Behälter nach Anspruch 6, wobei der Umgehungskühlkreislauf eine Einlassleitung (134) und eine Rücklaufleitung (140) umfasst, die fluidisch an den Wärmetauscher gekoppelt sind.

9. Behälter nach Anspruch 8, wobei der Umgehungskühlkreislauf ferner ein Umgehungsventil (136) umfasst, das konfiguriert ist, um das Kältemittel dem Umgehungskühlkreislauf selektiv zuzuführen.

10. Behälter nach Anspruch 6, ferner umfassend eine Steuerung (174), die programmiert ist, um das Umgehungsventil selektiv zwischen einem ersten Zustand und einem zweiten Zustand zu schalten, wenn zumindest eines von einer vorbestimmten Umgebungstemperatur überschritten ist und einer vorbestimmten Kraftstofftemperatur überschritten ist.

11. Behälter nach Anspruch 6, ferner umfassend:
einen ersten Temperatursensor (170), der konfiguriert ist, um eine Temperatur von Umgebungsluft zu erfassen; und
einen zweiten Temperatursensor (172), der konfiguriert ist, um eine Temperatur des Kraftstoffes zu erfassen.

12. Verfahren zum Steuern des Kraftstoffkühlsystems (100) nach Anspruch 1, wobei eine Steuerung (174) an den Umgehungskühlkreislauf und den Kraftstoffkühlkreislauf gekoppelt ist, wobei die Steuerung programmiert ist, um selektiv zwischen einem ersten Modus und einem zweiten Modus zu arbeiten, wobei in dem ersten Modus das Kältemittel den Umgehungskühlkreislauf umgeht und der Kraftstoff den Kraftstoffkühlkreislauf umgeht und wobei in dem zweiten Modus das Kältemittel durch den Umgehungskühlkreislauf zirkuliert wird und der Kraftstoff durch den Kraftstoffkühlkreislauf zirkuliert wird.

## Revendications

1. Système de refroidissement de carburant (100) comprenant :
une unité de réfrigération (14) conçue pour faire circuler un réfrigérant ;
un circuit de refroidissement de dérivation (132) couplé de manière fluidique à l'unité de réfrigération ;
un système de production d'énergie (30) couplé de manière opérationnelle à l'unité de réfrigération, le système de production d'énergie comportant un réservoir de carburant (34) couplé de manière fluidique à un moteur (32) par un conduit d'alimentation (154) ;
un circuit de refroidissement de carburant (160) couplé de manière fluidique entre le réservoir de carburant et le moteur, le circuit de refroidissement de carburant étant couplé thermiquement au circuit de refroidissement de dérivation et conçu pour refroidir un carburant par échange thermique avec le réfrigérant ;
un échangeur de chaleur (138) couplé thermiquement entre le circuit de refroidissement de dérivation et le circuit de refroidissement de carburant ;
dans lequel le circuit de refroidissement de carburant comprend un conduit d'entrée de carburant (162) et un conduit de retour de carburant (166) couplés de manière fluidique à l'échangeur de chaleur (138) ;
le circuit de refroidissement de dérivation (132) comprenant en outre un conduit d'entrée (134) et un conduit de retour (140) couplé de manière fluidique à l'échangeur de chaleur (138), et une vanne de dérivation (136) conçue pour alimenter sélectivement le réfrigérant vers le circuit de refroidissement de dérivation (132) ;
**caractérisé par** :
le circuit de refroidissement de carburant comprenant en outre une vanne de dérivation (164) conçue pour fournir sélectivement le carburant au circuit de refroidissement de carburant, et une seconde vanne de dérivation (146) disposée sur le conduit d'alimentation (154) entre le conduit d'entrée de carburant (162) et le conduit de retour de carburant (166) conçu pour fournir sélectivement du carburant directement du réservoir de carburant (34) au moteur (32) ;

2. Système selon la revendication 1, comprenant en outre un conteneur (10) conçu pour stocker une cargaison (12), dans lequel l'unité de réfrigération est couplée au conteneur et conçue pour conditionner un environnement à l'intérieur du conteneur.

3. Système selon la revendication 1, dans lequel l'unité de réfrigération comprend un compresseur (112), un condenseur (116) et un évaporateur (122), dans lequel le circuit de refroidissement de dérivation est couplé de manière fluidique entre l'évaporateur et le compresseur en aval de l'évaporateur.

4. Système selon la revendication 1, comprenant en outre un dispositif de commande (174) programmé pour commuter sélectivement la vanne de dérivation entre une première condition et une seconde condition lorsqu'au moins une température ambiante prédéterminée est dépassée et qu'une température de carburant prédéterminée est dépassée.

5. Système selon la revendication 1, comprenant en outre :
un premier capteur de température (170) conçu pour détecter une température de l'air ambiant ; et
un second capteur de température (172) conçu pour détecter une température du carburant.

6. Conteneur de cargaison à température contrôlée (10) comprenant :
une pluralité de parois définissant un espace intérieur (16) conçu pour stocker une cargaison (12) ; et
un système de refroidissement de carburant selon la revendication 1.

7. Conteneur selon la revendication 6, dans lequel l'unité de réfrigération comprend un compresseur (112), un condenseur (116) et un évaporateur (122), dans lequel le circuit de refroidissement de dérivation est couplé de manière fluidique entre l'évaporateur et le compresseur en aval de l'évaporateur.

8. Conteneur selon la revendication 6, dans lequel le circuit de refroidissement de dérivation comprend un conduit d'entrée (134) et un conduit de retour (140) couplés de manière fluidique à l'échangeur de chaleur.

9. Conteneur selon la revendication 8, dans lequel le circuit de refroidissement de dérivation comprend en outre une vanne de dérivation (136) conçue pour fournir sélectivement le réfrigérant au circuit de refroidissement de dérivation.

10. Conteneur selon la revendication 6, comprenant en outre un dispositif de commande (174) programmé pour commuter sélectivement la vanne de dérivation entre une première condition et une seconde condition lorsqu'au moins l'une d'une température ambiante prédéterminée est dépassée et d'une température de carburant prédéterminée est dépassée.

11. Conteneur selon la revendication 6, comprenant en outre :
un premier capteur de température (170) conçu pour détecter une température de l'air ambiant ; et
un second capteur de température (172) conçu pour détecter une température du carburant.

12. Procédé de commande du système de refroidissement de carburant (100) selon la revendication 1, dans lequel un dispositif de commande (174) est couplé au circuit de refroidissement de dérivation et au circuit de refroidissement de carburant, le dispositif de commande étant programmé pour fonctionner sélectivement entre un premier mode et un second mode, dans lequel dans le premier mode, le réfrigérant contourne le circuit de refroidissement de dérivation et le carburant contourne le circuit de refroidissement de carburant, et dans lequel dans le second mode, le réfrigérant circule dans le circuit de refroidissement de dérivation et le carburant circule dans le circuit de refroidissement de carburant.
